# EUROPEAN PATENT APPLICATION

(11) **EP 4 683 034 A1**
(43) Date of publication of application: **21.01.2026**
(21) Application number: 25755065.7
(22) Date of filing: 14.01.2025
(51) Int. Cl.: H01M 10/42, H01M 50/673, A62C 3/16, A62C 35/10, H01M 50/317, H01M 10/653, H01M 10/6567, H01M 10/613, A62C 35/68, B60L 50/64

(54) **VEHICLE DEVICE INCLUDING BATTERY PACK**

(30) Priority: 15.02.2024 KR 20240021604
(71) Applicant: LG Energy Solution, Ltd., Seoul 07335 (KR)
(72) Inventor: KIM, Seung Joon, Daejeon 34122 (KR); PARK, Jin Yong, Daejeon 34122 (KR); RO, Yong Hwan, Daejeon 34122 (KR); CHI, Ho June, Daejeon 34122 (KR); KIM, Kyungwoo, Daejeon 34122 (KR)
(74) Representative: Hoffmann Eitle
(86) International application number: PCT/KR2025/000778
(87) International publication number: WO 2025/173943

(57) **Abstract**

A vehicle device according to certain aspects of the present disclosure comprises: a battery pack; and a tank. The battery pack comprises a plurality of battery cells; a pack frame in which the battery cells are directly mounted or in which the battery cells are mounted while being housed in a module frame; and a pack cover that covers the pack frame. The tank comprises a cooling water or fire extinguishing water; a tank discharge port through which cooling water or fire extinguishing water is discharged; and a sealing layer provided on one side surface where the tank discharge port is disposed.

## Description

### [TECHNICAL FIELD]

### Cross-Reference to Related Application(s)

This application claims priority to and the benefit of Korean Patent Application no. KR10-2024-0021604, filed on February 15, 2024, with the Korean Intellectual Property Office, the entire contents of which are incorporated herein by reference.

The present disclosure relates to a vehicle device including a battery pack, and more particularly, to a vehicle device that can prevent the occurrence of ignition on the surface of a battery pack by lowering the surface temperature of the battery pack.

### [BACKGROUND ART]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are disposed, and in case of secondary batteries used for medium- and large-size vehicle devices such as automobiles, a battery module is used, which includes multiple battery cells electrically connected to each other. In the battery module, the multiple battery cells are connected in series or parallel to form a battery cell stack, which improves the capacity and the power. One or more battery modules may be mounted together with various control and protection systems such as a battery management system (BMS), a battery disconnect unit (BDU), and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, safety is one of the most important issues in such a battery pack. In particular, if a thermal event occurs in any one of the plurality of battery cells included in the battery pack, high-temperature gas and heat are generated.

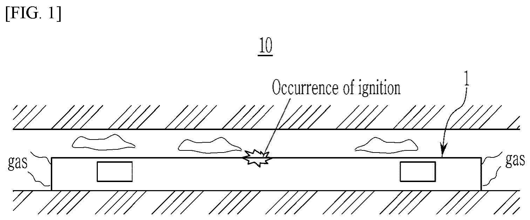

FIG. 1 is a cross-sectional view showing a conventional battery pack and chassis inside a vehicle device.

Referring to FIG. 1, when a thermal runaway occurs, high-temperature venting gas is discharged from the side surface of the conventional battery pack 1. Due to thermal runaway inside the conventional battery pack 1, the surface of the conventional battery pack 1 increases in temperature. The high-temperature venting gas flows into the surface of the conventional battery pack 1 from the inside of the conventional chassis 10. At this time, the high-temperature venting gas causes ignition on the surface of the conventional battery pack 1. Since such ignition may lead to an explosion of the battery pack 1 and the vehicle device including the same, there is a need to lower the temperature of the surface of the battery pack to prevent the occurrence of ignition on the surface of the battery pack.

### [DETAILED DESCRIPTION OF THE INVENTION]

### [Technical Problem]

Therefore, it is an object of the present disclosure to prevent surface ignition of a battery pack when a thermal runaway occurs, and specifically to provide a vehicle device that can prevent the occurrence of ignition on the surface of a battery pack by lowering the surface temperature of the battery pack.

However, the technical objects to be solved by embodiments of the present disclosure are not limited to the above-described objects, and can be variously expanded within the scope of the technical idea included in the present disclosure.

### [Technical Solution]

A vehicle device according to certain aspects of the present disclosure comprises a battery pack; and a tank. The battery pack comprises a plurality of battery cells; a pack frame in which the battery cells are directly mounted or in which the battery cells are mounted while being housed in a module frame; and a pack cover that covers the pack frame. The tank comprises a cooling water or fire extinguishing water; a tank discharge port through which cooling water or fire extinguishing water is discharged; and a sealing layer provided on one side surface where the tank discharge port is disposed.

The sealing layer is melted or ruptured at a high temperature, so that the cooling water or fire extinguishing water can be discharged.

The tank discharge port may be provided toward the upper end of the pack cover.

The battery pack may have a valve for discharging internal gas.

The tank may be fixed to the chassis between the pack cover and the chassis inside the vehicle device.

The battery pack may comprise one or more frame members that are provided in the pack cover and have cooling water or fire extinguishing water.

The frame member may be a pipe-shaped member having a cavity part therein and extending in one direction. The cooling water or the fire extinguishing water may be provided in the cavity part.

The frame member may comprise a TIM pad that abuts on the pack cover.

The vehicle device may comprise an adhesive tape positioned between the frame member and the TIM pad.

The frame member may comprise one or more frame member valves that discharge cooling water or fire extinguishing water.

The frame member valve may comprise a frame member discharge port directed toward the pack cover.

The frame member may comprise a mounting part having a mounting hole formed therein. A mounting bolt may pass through the mounting hole and be fastened to the pack cover.

The frame member may comprise a first cavity part and a second cavity part in which the cooling water or the fire extinguishing water is provided. The mounting part may be positioned between the first cavity part and the second cavity part.

The frame member may be welded and joined to the pack cover.

The frame member may be fixed to the pack cover between the pack cover and the chassis inside the vehicle device.

### [Advantageous Effects]

According to certain embodiments of the present disclosure, the vehicle device includes a tank having cooling water or fire extinguishing water, which can lower the surface temperature of the battery pack. Thereby, it is possible to prevent the occurrence of ignition on the surface of the battery pack and thus prevent flames from flowing out.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a cross-sectional view showing a conventional battery pack and chassis inside a vehicle device.
FIG. 2 is an exploded perspective view showing a battery pack according to certain embodiments of the present disclosure.
FIG. 3 is a perspective view showing a battery pack according to certain embodiments of the present disclosure.
FIG. 4 is a cross-sectional view showing a chassis inside a vehicle device according to certain embodiments of the present disclosure.
FIG. 5 is a partially enlarged diagram showing a section of "A" of FIG. 4.
FIG. 6 is a perspective view showing a battery pack according to certain other embodiments of the present disclosure.
FIG. 7 is an exploded perspective view showing a battery pack according to certain other embodiments of the present disclosure.
FIG. 8 is a perspective view showing a battery pack according to certain other embodiments of the present disclosure.
FIG. 9 is a plan view showing a battery pack according to certain other embodiments of the present disclosure.
FIG. 10 is a plan view showing a battery pack according to certain other embodiments of the present disclosure.
FIG. 11 is a cross-sectional view showing a cross section taken along the cutting line A-A' of FIG. 9.
FIG. 12 is a cross-sectional view showing a battery pack according to certain other embodiments of the present disclosure.
FIG. 13 is a cross-sectional view showing a battery pack according to certain other embodiments of the present disclosure.
FIG. 14 is a partial perspective view showing a discharge port of a frame member valve included in a frame member.
FIG. 15 is a cross-sectional view showing a cross section taken along the cutting line B-B' of FIG. 9.
FIG. 16 is a cross-sectional view showing a battery pack according to certain other embodiments of the present disclosure.
FIG. 17 is a cross-sectional view showing a chassis inside a vehicle device according to certain other embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

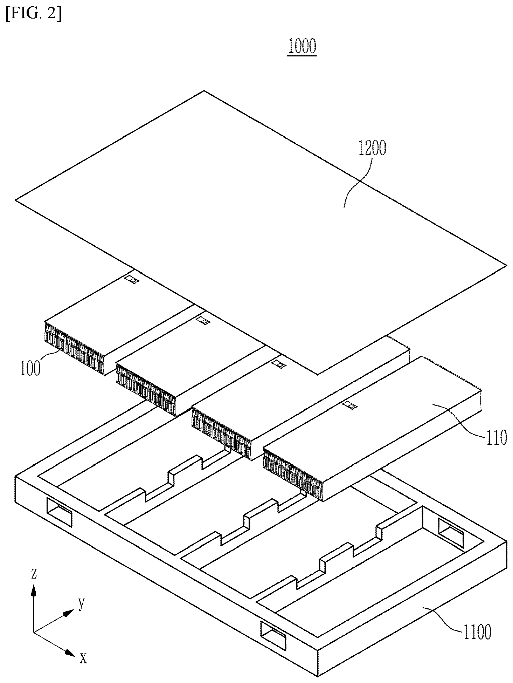

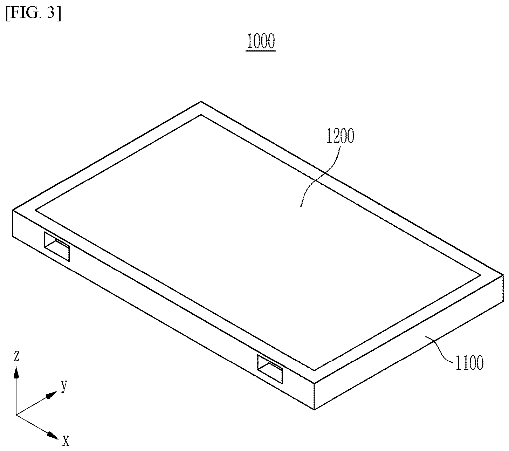

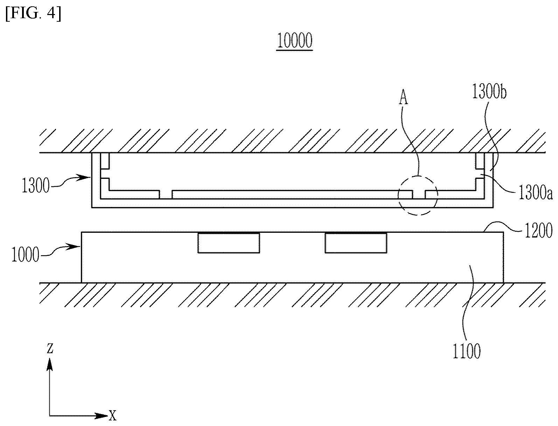

FIG. 2 is an exploded perspective view showing a battery pack 1000 according to certain embodiments of the present disclosure. FIG. 3 is a perspective view showing a battery pack 1000 according to certain embodiments of the present disclosure. FIG. 4 is a cross-sectional view showing a chassis 10000 inside a vehicle device according to certain embodiments of the present disclosure. Specifically, FIG. 4 shows a chassis 10000, a tank 1300, and a battery pack 1000.

Referring to FIGS. 2 to 4, a vehicle device according to certain embodiments of the present disclosure includes a battery pack 1000; and a tank 1300. The battery pack 1000 includes a plurality of battery cells 100; a pack frame 1100 in which the battery cells 100 are directly mounted or in which the battery cells 100 are mounted while being housed in a module frame; and a pack cover 1200 covering the pack frame 1100. The tank 1300 includes a cooling water or fire extinguishing water; a tank discharge port 1300a through which cooling water or fire extinguishing water is discharged; and a sealing layer 1300b provided on one side surface where the tank discharge port 1300a is disposed.

According to certain embodiments of the present disclosure, when an ignition occurs in the battery pack 1000, heat or gas generated in the battery pack 1000 may melt the sealing layer 1300b. That is, while the sealing layer 1300b wrapping around the tank discharge port 1300a is melting, the tank discharge port 1300a may be opened. The tank discharge port 1300a is opened, so that the cooling water or fire extinguishing water inside the tank 1300 can be discharged. The discharged cooling water or fire extinguishing water may be sprayed onto the surface of the battery pack 1000 to lower the surface temperature of the battery pack 1000. Thereby, it is possible to prevent the occurrence of ignition on the surface of the battery pack 1000 and thus block flames from flowing out and explosions from occurring.

The size of the tank 1300 may be determined according to the capacity, shape, size, and the like of the battery pack 1000. The size of the tank 1300 can cover the whole of the cross-sectional area (xy plane of FIG. 2) of the battery pack 1000.

The position and dimension of the tank discharge port 1300a can be determined according to the shape, size, and the like of the battery pack 1000.

The sealing layer 1300b can be applied to the whole of the outer surface of the tank 1300, or can be applied only to a portion corresponding to the tank discharge port 1300a. The material and role of the sealing layer 1300b will be described later.

The cooling water or the fire extinguishing water can be one of the known ones or a mixture thereof, and any of the known ones can be used as long as it is capable of dissipating heat from the battery pack 1000 by being held in the tank 1300.

The tank 1300 can include an opening/closing part (not shown) for injecting or discharging the cooling water or the fire extinguishing water. Users of the vehicle device can inject or discharge the cooling water or fire extinguishing water into or from the tank 1300 according to the remaining amount of cooling water or fire extinguishing water in the tank 1300 through the opening/closing part.

The tank 1300 may be provided with a water level sensor (not shown) that can check the remaining amount of cooling water or fire extinguishing water provided in the tank 1300. The vehicle device may be provided with a water level display unit (not shown) that receives data about the level of cooling water or fire extinguishing water from the water level sensor and displays the water level. Through the water level display unit, the user of the vehicle device can check the level of cooling water or fire extinguishing water.

When the level of cooling water or fire extinguishing water provided in the tank 1300 exceeds or falls below a preset level, the vehicle device may also include a water level warning display unit that can notify this fact to the user of the vehicle device. When a warning is displayed on the water level warning display unit, the user of the vehicle device can immediately take measures such as repairing the vehicle device.

Furthermore, the user of the vehicle device can easily check whether there is any leakage oil or leakage of cooling water or fire extinguishing water inside the tank 1300 through the water level display unit and the water level warning display unit.

The tank 1300 may be provided with a temperature sensor (not shown) that can check the temperature of the cooling water or fire extinguishing water provided in the tank 1300. The vehicle device may be provided with a temperature display unit (not shown) that receives data about the temperature of the cooling water or fire extinguishing water from the temperature sensor and displays the temperature. Through the temperature display unit, the user of the vehicle device can check the temperature of the cooling water or fire extinguishing water.

Furthermore, if the temperature of the cooling or fire extinguishing water provided in the tank 1300 exceeds a preset temperature, the vehicle device may be provided with a temperature warning display unit that can notify this fact to the user of the vehicle device. If a warning is displayed on the temperature warning display unit, the user of the vehicle device can immediately take measures such as repairing the vehicle device.

The side surface of the tank 1300 may be provided with a transparent glass (not shown) that can visually check the remaining amount of cooling water or fire extinguishing water provided in the tank 1300. Thereby, a user, maintenance engineer or the like of the vehicle device may directly visually check the remaining amount of cooling water or fire extinguishing water provided in the tank 1300.

The tank 1300 may be provided with a hose (not shown) for injecting or discharging cooling water or fire extinguishing water into or from the tank 1300. The hose may be communicated with the tank 1300 through an opening/closing part, or may be directly communicated with the tank 1300 without going through an opening/closing part.

The tank discharge port 1300a may automatically discharge cooling water or fire extinguishing water in linkage with a water level sensor and a temperature sensor in the tank 1300.

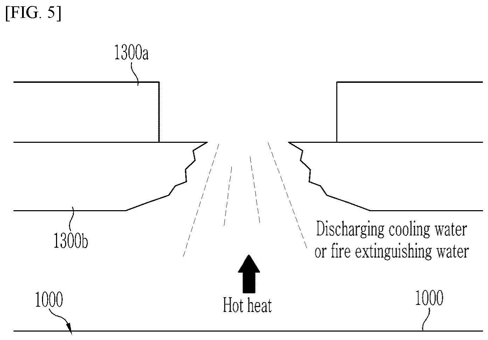

FIG. 5 is a partially enlarged diagram showing a section of "A" of FIG. 4. Specifically, FIG. 5 shows that the sealing layer 1300b is ruptured so that cooling water or fire extinguishing water is discharged.

Referring to FIGS. 4 and 5, the sealing layer 1300b may be melted or ruptured at a high temperature so that cooling water or fire extinguishing water may be discharged.

The sealing layer 1300b may include a material that is melted or ruptured at a high temperature. The sealing layer 1300b may have a structure that is sealed to the tank 1300 and the tank discharge port 1300a by a method such as fusion. The sealing layer 1300b may serve to seal the tank discharge port 1300a under an environment other than high temperatures.

The sealing layer 1300b may include a material that is melted or ruptured only at high temperatures. The material may be determined by the thickness and area of the sealing layer 1300b, the shape and dimension of the tank discharge port 1300a, the distance between the sealing layer 1300b and the upper end of the battery pack 1000, and the like. For example, the material may be a polyethylene terephthalate (PET) layer, a polyamide (PA) layer, a polycarbonate (PC) layer, or a polypropylene (PP) layer, and the thickness of the sealing layer 1300b may be determined according to the properties of the material.

The melting point of the sealing layer 1300b may be 200°C.

As described above, when an ignition occurs inside the battery pack 1000, heat or gas generated in the battery pack 1000 may melt the sealing layer 1300b. That is, while the sealing layer 1300b wrapping around the tank discharge port 1300a is melting, the tank discharge port 1300a may be opened. The tank discharge port 1300a is opened so that the cooling water or fire extinguishing water inside the tank 1300 can be discharged. The discharged cooling water or fire extinguishing water may be sprayed onto the surface of the battery pack 1000 to thereby lower the temperature of the surface of the battery pack 1000. Thereby, it is possible to prevent the occurrence of ignition on the surface of the battery pack 1000 and thus block flames from flowing out and explosions from occurring.

Referring again to FIGS. 3 to 5, the tank discharge port 1300a may be provided toward the upper end of the pack cover 1200.

The tank discharge port 1300a directs toward the pack cover 1200, so that the cooling water or fire extinguishing water discharged from the tank discharge port 1300a can be mixed with the venting gas discharged from the battery pack 1000. Thereby, the concentration of flammable substances in the gas diffused inside the chassis 10000 can be reduced, thereby preventing the occurrence of ignition on the surface of the battery pack 1000 and further preventing the generation of explosion inside the chassis 10000 due to ignition.

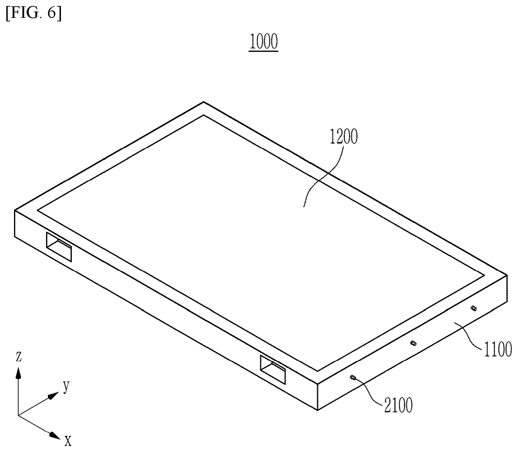

FIG. 6 is a perspective view showing a battery pack 1000 according to certain other embodiments of the present disclosure.

Referring to FIG. 6, the battery pack 1000 may be provided with a valve 2100 for discharging internal gas. Gas generated inside the battery pack 1000 may be discharged by the valve 2100. Thereby, it is possible to prevent and suppress the propagation of thermal runaway in the battery pack 1000, and minimize damage to the battery pack 1000.

The number, position, type, and the like of the valves 2100 may be appropriately determined taking into consideration the arrangement of the battery modules 110 (see FIG. 2) in the battery pack 1000, the structure of the battery modules 110 (see FIG. 2), and the venting system.

Referring again to FIG. 4, the tank 1300 may be fixed to the chassis 10000 between the pack cover 1200 and the chassis 10000 inside the vehicle device.

The tank 1300 may be fixed to the chassis 10000 inside the vehicle device between the pack cover 1200 and the chassis 10000 inside the vehicle device. Thereby, the tank 1300 is fixed even in situations such as vibration or impact of the vehicle device, thereby securing mechanical rigidity and preventing ignition inside the chassis 10000.

Through the surface contact between the chassis 10000 and the tank 1300, the tank 1300 can be fixed to the chassis 10000 while minimizing the space between the upper ends. **In** this case, a gasket (not shown) or the like can be provided between the tank 1300 and the chassis 10000.

Furthermore, the tank 1300 can be fixed to the chassis 10000 by a bolt/nut coupling, but is not limited thereto.

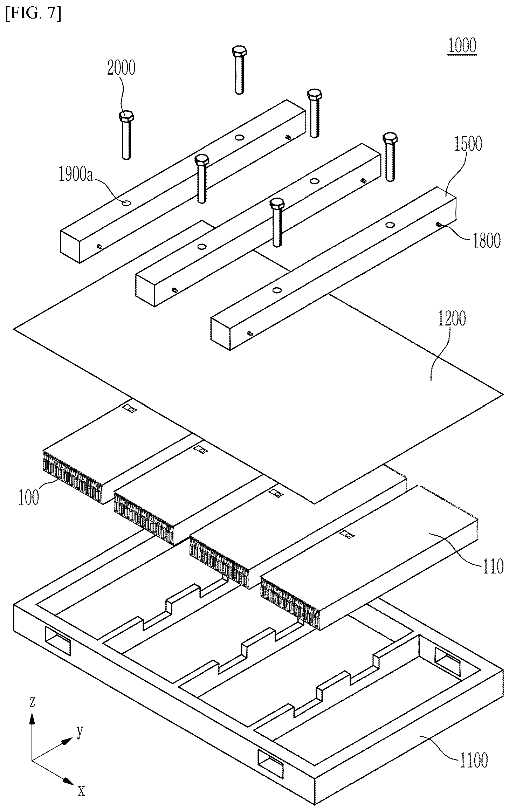

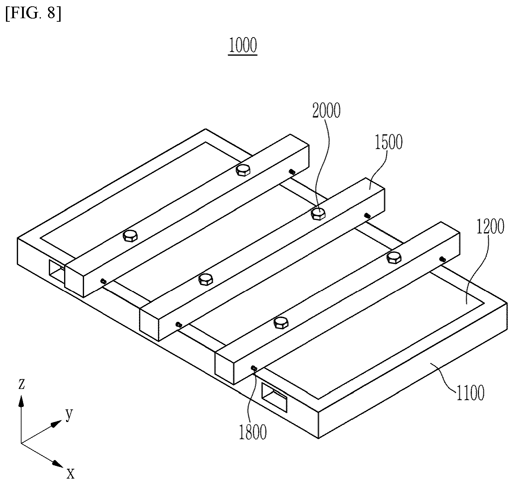

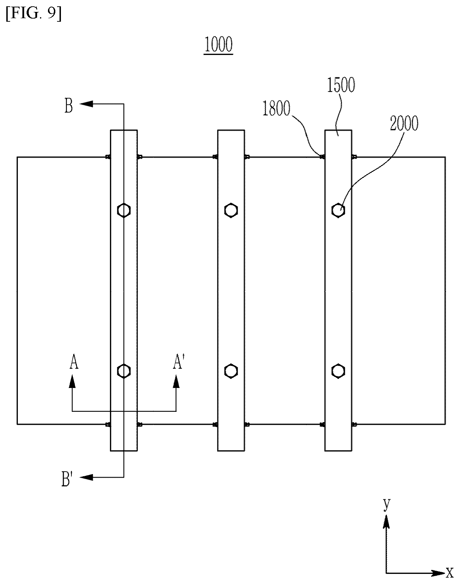

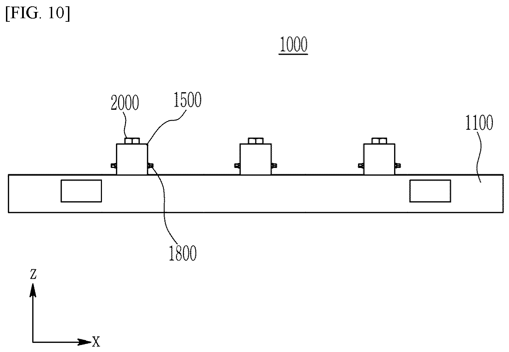

FIG. 7 is an exploded perspective view showing a battery pack 1000 according to certain other embodiments of the present disclosure. FIG. 8 is a perspective view showing a battery pack 1000 according to certain other embodiments of the present disclosure. FIG. 9 is a plan view showing a battery pack 1000 according to certain other embodiments of the present disclosure. Specifically, FIG. 9 is a plan view of a battery pack 1000 viewed along the -z-axis direction on the xy-plane. FIG. 10 is a plan view showing a battery pack 1000 according to certain other embodiments of the present disclosure. Specifically, FIG. 10 is a plan view of the battery pack 1000 viewed along the +y-axis direction on the xz plane.

Referring to FIGS. 7 to 10, the battery pack 1000 may be provided on the pack cover 1200, and may include one or more frame members 1500 having cooling water or fire extinguishing water.

The frame member 1500 may have a shape that extends long along a direction perpendicular to the direction of the side with the longer width of the battery pack 1000, as shown in FIGS. 7 to 9. Furthermore, a plurality of frame members 1500 may be provided, and the plurality of frame members 1500 may be arranged at a certain interval along the direction of the side with the longer width of the battery pack 1000.

According to certain embodiments of the present disclosure, since the battery pack 1000 includes one or more frame members 1500 having cooling water or fire extinguishing water, the temperature of the surface of the battery pack 1000 can be lowered. Thereby, it is possible to prevent the occurrence of ignition on the surface of the battery pack 1000 and thus block flames from flowing out and explosions from occurring.

The frame member 1500 may include an opening/closing part (not shown) for injecting or discharging cooling water or fire extinguishing water. Users of the vehicle device may inject or discharge cooling water or fire extinguishing water into the frame member 1500 through the opening/closing part, according to the remaining amount of cooling water or fire extinguishing water in the frame member 1500.

The frame member 1500 may be provided with a water level sensor (not shown) that can check the remaining amount of cooling water or fire extinguishing water provided in the frame member 1500. The vehicle device may be provided with a water level display unit (not shown) that receives data about the level of cooling water or fire extinguishing water from the water level sensor, and displays the water level. Through the water level display unit, the user of the vehicle device may check the level of cooling water or fire extinguishing water.

Furthermore, if the level of the cooling water or fire extinguishing water provided in the frame member 1500 exceeds or falls below a preset level, the vehicle device may be provided with a level warning display unit that can notify this fact to the user of the vehicle device. If a warning is displayed on the level warning display unit, the user of the vehicle device can immediately take measures such as repairing the vehicle device.

Furthermore, the user of the vehicle device can easily check whether there is any leakage oil or leakage of the cooling water or fire extinguishing water in the frame member 1500 through the level display unit and the level warning display unit.

The frame member 1500 may be provided with a temperature sensor (not shown) that can check the temperature of the cooling water or fire extinguishing water provided in the frame member 1500. The vehicle device may be provided with a temperature display unit (not shown) that receives data on the temperature of the cooling water or fire extinguishing water from the temperature sensor and displays the temperature. The user of the vehicle device can check the temperature of the cooling water or fire extinguishing water through the temperature display unit.

In addition, when the temperature of the cooling water or extinguishing water provided in the frame member 1500 exceeds a preset temperature, the vehicle device may be provided with a temperature warning display unit that notifies this fact to the user of the vehicle device. When a warning is displayed on the temperature warning display unit, the user of the vehicle device can immediately take measures such as repairing the vehicle device.

The side surface of the frame member 1500 may be provided with a transparent glass (not shown) that can visually check the remaining amount of the cooling water or fire extinguishing water provided in the frame member 1500. Thereby, the user, maintenance engineer or the like of the vehicle device can directly visually check the remaining amount of the cooling water or fire extinguishing water provided in the frame member 1500.

The frame member 1500 may be provided with a hose (not shown) for injecting or discharging the cooling water or fire extinguishing water into or from the frame member 1500. The hose may be communicated with the frame member 1500 through the opening/closing part, or may be directly communicated with the frame member 1500 without going through the opening/closing part.

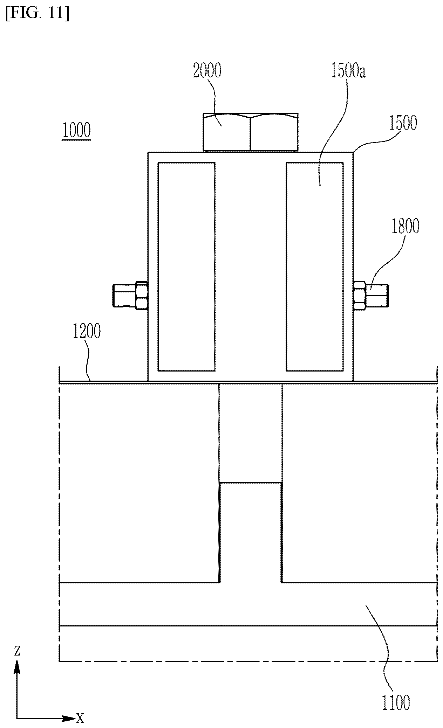

FIG. 11 is a cross-sectional view showing a cross section taken along the cutting line A-A' of FIG. 9.

Referring to FIG. 11, the frame member 1500 may be a pipe-shaped member having a cavity part 1500a therein and extending in one direction. Cooling water or fire extinguishing water may be provided in the cavity part 1500a.

Referring to FIGS. 7 to 11, the frame member 1500 may be a pipe-shape member having a cavity part 1500a therein and extending in one direction. However, the frame member 1500 in the present disclosure is not limited to a pipe shape, and may be sufficient if it has a shape capable of holding a liquid such as cooling water or fire extinguishing water.

The cooling water or fire extinguishing water may be provided in the cavity part 1500a. The cooling water or fire extinguishing water may be one of the known ones or a mixture thereof, and any of the known ones may be used as long as it is capable of dissipating heat from the battery cells 100 (see FIG. 2) by being held in the cavity part 1500a inside the frame member 1500.

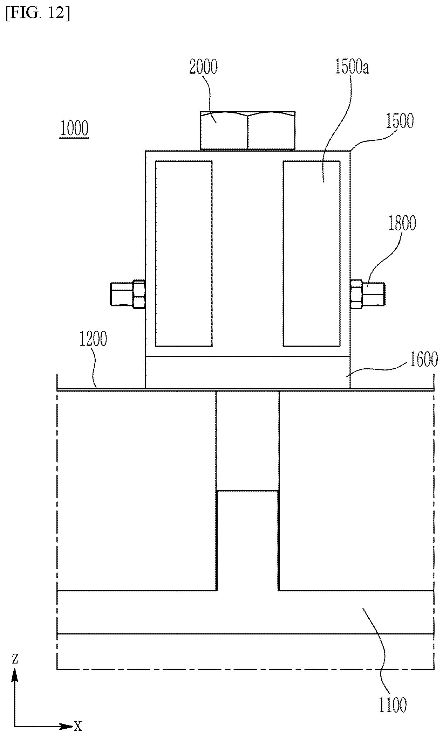

FIG. 12 is a cross-sectional view showing a battery pack 1000 according to certain other embodiments of the present disclosure.

Referring to FIG. 12, the frame member 1500 may include a TIM pad 1600 that abuts on the pack cover 1200.

The TIM pad 1600 is provided between the frame member 1500 and the pack cover 1200, so that the heat of the pack cover 1200 can be effectively transferred to the frame member 1500. Thereby, it is possible to effectively lower the surface temperature of the battery pack 1000 and prevent the occurrence of ignition on the surface of the battery pack 1000, thereby preventing flames from flowing out.

The types of the TIM pad 1600 include various types such as heat-dissipating grease, heat-dissipating sheets, metal plates, and heat-conductive adhesives, and any of the known types may be used as long as it can transfer the heat of the pack cover 1200 to the frame member 1500.

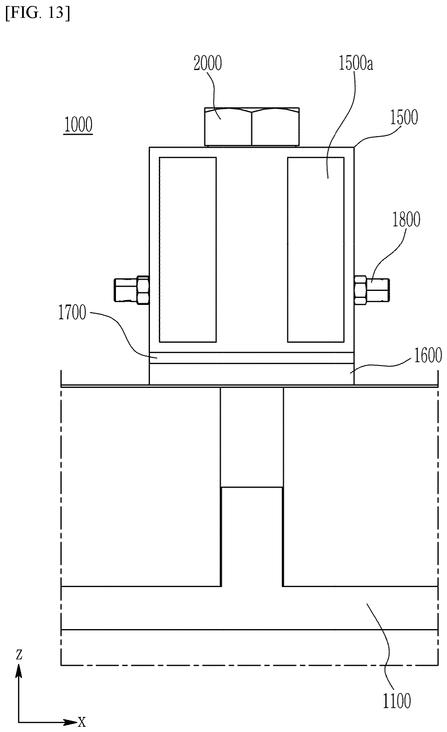

FIG. 13 is a cross-sectional view showing a battery pack 1000 according to certain other embodiments of the present disclosure.

Referring to FIG. 13, a vehicle device according to certain other embodiments of the present disclosure may include an adhesive tape 1700 positioned between the frame member 1500 and the TIM pad 1600.

The adhesive tape 1700 is positioned between the frame member 1500 and the TIM pad 1600, which makes it possible to fix between the frame member 1500 and the TIM pad 1600. Thereby, the mechanical rigidity of the battery pack 1000 can be secured in situations such as vibration and impact of the vehicle device.

The material, area, thickness, and the like of the adhesive tape 1700 can be appropriately determined taking into consideration the size, area, weight, material properties, required adhesive force, thermal conductivity, and the like of the frame member 1500 and the TIM pad 1600.

Referring again to FIGS. 7 to 11, the frame member 1500 may include one or more frame member valves 1800 that discharge cooling water or fire extinguishing water.

The cooling water or fire extinguishing water discharged by the frame member valve 1800 may be vaporized by the heat of the surface of the battery pack 1000 when a thermal runaway occurs. By the vaporization of the cooling water or fire extinguishing water, that is, as the cooling water or fire extinguishing water changes phase from liquid to gas, it deprives heat of the surface of the battery pack 1000, which can lower the temperature of the surface of the battery pack 1000. Thereby, it is possible to prevent the occurrence of ignition on the surface of the battery pack 1000 and thus prevent flames from flowing out.

The number, position, type, and the like of the frame member valve 1800 can be appropriately determined taking into consideration the size of the battery pack 1000, the capacity of the cooling water or fire extinguishing water in the frame member 1500, and the like.

The frame member valve 1800 can automatically discharge cooling water or fire extinguishing water in linkage with the water level sensor and temperature sensor in the frame member 1500.

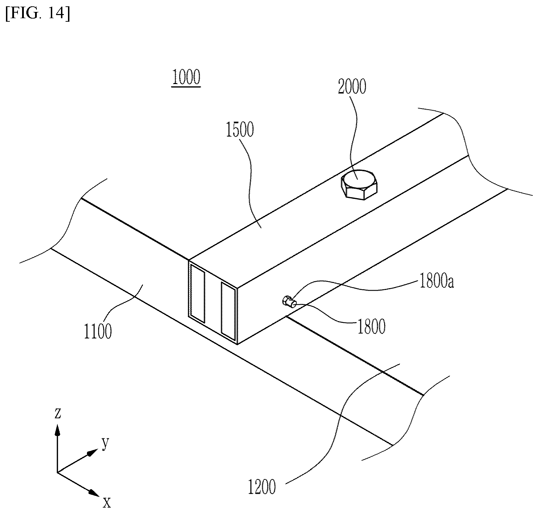

FIG. 14 is a partial perspective view showing a discharge port of a frame member valve 1800 included in a frame member 1500.

Referring to FIG. 14, the frame member valve 1800 may include a frame member discharge port 1800a directed toward the pack cover 1200.

Since the frame member discharge port 1800a of the frame member valve 1800 directs toward the pack cover 1200, the cooling water or fire extinguishing water discharged from the frame member discharge port 1800a of the frame member valve 1800 can be mixed with the venting gas discharged from the battery pack 1000. Thereby, the concentration of flammable substances of gas diffused inside the chassis 10000 can be reduced, thereby preventing the occurrence of ignition on the surface of the battery pack 1000, and further preventing an explosion inside the chassis 10000 due to ignition.

The frame member discharge port 1800a can be directed along the direction of the side with the longer width of the battery pack 1000.

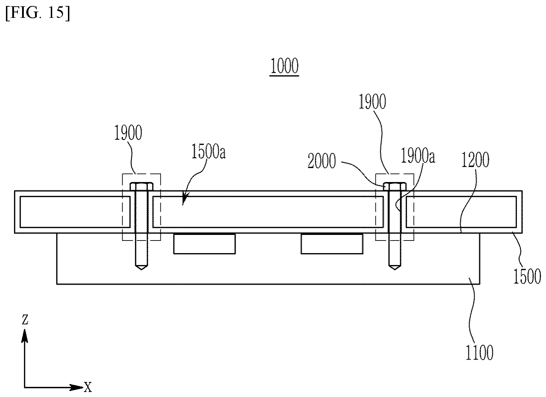

FIG. 15 is a cross-sectional view showing a cross section taken along the cutting line B-B' of FIG. 9.

Referring to FIGS. 7 to 9 and 15, the frame member 1500 may include a mounting part 1900 having a mounting hole 1900a formed therein. A mounting bolt 2000 may pass through the mounting hole 1900a and be fastened to the pack cover 1200.

The frame member 1500 may include a mounting part 1900 having a mounting hole 1900a formed therein. A mounting bolt 2000 may pass through the mounting hole 1900a and be fastened to at least one of the pack cover 1200 or the pack frame 1100. That is, the mounting part 1900 includes a mounting hole 1900a that penetrates in the -z-axis direction of FIG. 15.

The pack cover 1200 also includes a fastening hole (not shown) at a position corresponding to the mounting hole 1900a. In a state where the mounting hole 1900a and the fastening hole are aligned, the mounting bolts 2000 passing through them are fastened, so that the frame member 1500 is fixed to the battery pack 1000. In one exemplary embodiment, the mounting bolt 2000 may be fastened to the pack cover 1200. In another exemplary embodiment, the mounting bolt 2000 may be fastened to both the pack cover 1200 and the pack frame 1100. **In** one embodiment, the pack frame 1100 may include a vertical beam (not shown) for dividing the battery cells 100 (see FIG. 2) into sections. For stable fastening, the mounting bolt 2000 may pass through the mounting hole 1900a and the fastening hole of the pack cover 1200 and then be fastened to the vertical beam. Alternatively, the mounting bolt 2000 may pass through the vertical beam and then be bolt-coupled to a separate nut member (not shown).

For effective fixation, it is preferable that the mounting part 1900 and the mounting bolt 2000 applied to each frame member 1500 are configured in a plurality of numbers.

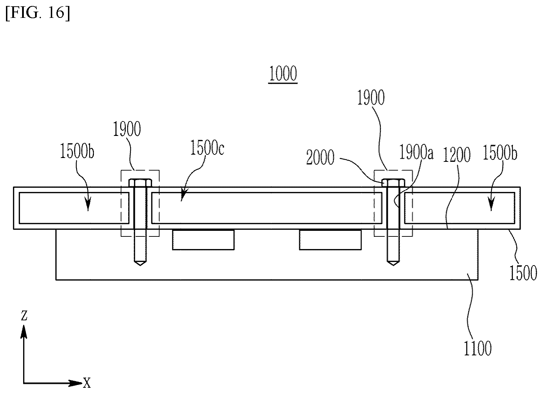

FIG. 16 is a cross-sectional view showing a battery pack 1000 according to certain other embodiments of the present disclosure.

Referring to FIG. 16, the frame member 1500 may include a first cavity part 1500b and a second cavity part 1500c in which cooling water or fire extinguishing water is provided. A mounting part 1900 may be positioned between the first cavity part 1500b and the second cavity part 1500c.

The first cavity part 1500b and the second cavity part 1500c may include a first opening/closing part (not shown) and a second opening/closing part (not shown), respectively. Users of a vehicle device may inject or discharge cooling water or fire extinguishing water into or from both the first cavity part 1500b and the second cavity part 1500c, or either the first cavity part 1500b or the second cavity part 1500c, depending on the remaining amount of cooling water or fire extinguishing water in the first cavity part 1500b and the second cavity part 1500c, through the first opening/closing part and the second opening/closing part.

The first cavity part 1500b and the second cavity part 1500c may each be provided with a first water level sensor (not shown) and a second water level sensor (not shown). The vehicle device may be provided with a first water level display unit and a second water level display unit that receive data about the level of cooling water or fire extinguishing water in the first cavity part 1500b and the second cavity part 1500c from each of the first water level sensor and the second water level sensor, and display the water level. Through the first water level indicator and the second water level indicator, the user of the vehicle device can check the level of the cooling water or fire extinguishing water in the first cavity part 1500b and the second cavity part 1500c, respectively.

In addition, when the level of the cooling water or fire extinguishing water in the first cavity part 1500b or the second cavity part 1500c exceeds or falls below a preset water level, the vehicle device may be provided with a first water level warning display unit and a second water level warning display unit that can notify this fact to the user of the vehicle device. If a warning is displayed on both the first water level warning display unit and the second water level warning display unit, or if a warning is displayed on one of the first water level warning display unit and the second water level warning display unit, the user of the vehicle device can immediately take measures such as repairing the vehicle device.

In addition, the user of the vehicle device can easily check whether there is any leakage oil or leakage of cooling water or fire extinguishing water inside the frame member 1500 through the first water level display unit, the second water level display unit, the first water level warning display unit, and the second water level warning display unit.

The first cavity part 1500b and the second cavity part 1500c may each be provided with a first temperature sensor (not shown) and a second temperature sensor (not shown). The vehicle device may be provided with a first temperature display unit and a second temperature display unit that receive data on the temperature of the cooling water or fire extinguishing water inside the first cavity part 1500b and the second cavity part 1500c from the first temperature sensor and the second temperature sensor, and display the temperature. Through the first temperature display unit and the second temperature display unit, the user of the vehicle device can check the temperature of the cooling water or fire extinguishing water inside the first cavity part 1500b and the second cavity part 1500c, respectively.

In addition, when the temperature of the cooling water or fire extinguishing water in the first cavity part 1500b or the second cavity part 1500c exceeds or falls below a preset temperature, the vehicle device may be provided with a first temperature warning display unit and a second temperature warning display unit that can notify this face to the user of the vehicle device. If a warning is displayed on both the first temperature warning display unit and the second temperature warning display unit, or if a warning is displayed on one of the first temperature warning display unit and the second temperature warning display unit, the user of the vehicle device can immediately take measures such as repairing the vehicle device.

In addition, the user of the vehicle device can easily check whether there is any leakage oil or leakage of the cooling water or fire extinguishing water in the frame member 1500 through the first temperature display unit, the second temperature display unit, the first temperature warning display unit, and the second temperature warning display unit.

The first cavity part 1500b and the second cavity part 1500c may be provided with a first hose and a second hose for injecting or discharging cooling water or fire extinguishing water into or from the first cavity part 1500b and the second cavity part 1500c, respectively. The first hose and the second hose may be communicated with the first cavity part 1500b and the second cavity part 1500c through the first opening/closing part and the second opening/closing part, or may be directly communicated with the frame member 1500 without going through the first opening/closing part and the second opening/closing part.

Referring again to FIGS. 14 and 16, the first cavity part 1500b and the second cavity part 1500c may be provided with a frame member valve 1800, respectively. Depending on the temperature or remaining amount of the cooling water or fire extinguishing water in the first cavity part 1500b and the second cavity part 1500c, each frame member valve 1800 can independently discharge the cooling water or fire extinguishing water. Specifically, regardless of whether the frame member valve 1800 provided in the second cavity part 1500c is operated, only the frame member valve 1800 provided in the first cavity part 1500b can be operated to discharge the cooling water or fire extinguishing water in the first cavity part 1500b.

A mounting part 1900 can be positioned between the first cavity part 1500b and the second cavity part 1500c. That is, the first cavity part 1500b and the second cavity part 1500c can be partitioned by the mounting part 1900.

The frame member 1500 can be welded and joined to the pack cover 1200. Through the welding and joining process between the frame member 1500 and the pack cover 1200, the frame member 1500 can be more reliably fixed to the pack cover 1200, thereby securing the mechanical rigidity of the battery pack 1000.

Welding-related factors such as the welding method, welding area, and welding agent can be appropriately determined taking into consideration the size of the battery pack 1000, the size and weight of the frame member 1500, and the material properties of the battery pack 1000 and the frame member 1500.

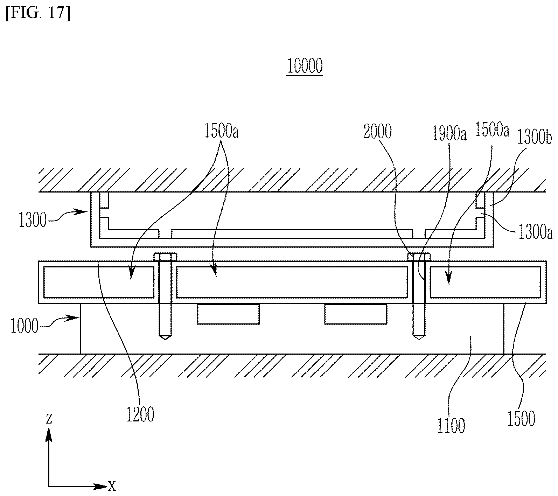

FIG. 17 is a cross-sectional view showing a chassis 10000 inside a vehicle device according to certain other embodiments of the present disclosure. Specifically, FIG. 17 shows a chassis 10000, a tank 1300, a frame member 1500, and a battery pack 1000. Details of each configuration are omitted because they overlap with the previously described contents.

Referring to FIG. 17, the frame member 1500 can be fixed to the pack cover 1200 between the pack cover 1200 and the chassis 10000 inside the vehicle device. More specifically, the frame member 1500 can be positioned between the pack cover 1200 and the tank 1300 and can be fixed to the pack cover 1200. Details of a method for fixing the frame member 1500 to the pack cover 1200 are omitted because they overlap with the previously described contents.

Thereby, even in situations such as vibration or impact of the vehicle device, the frame member is fixed to the pack cover, thereby securing mechanical rigidity and preventing ignition inside the chassis.

In the embodiments above, expressions indicating directions such as "front," "rear," "left," "right," "up," and "down" have been used. These expressions are used only to facilitate the description, and may vary, for example, depending on the location of a target object or an observer.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

1000: battery pack
1100: pack frame
1200: pack cover
1300: tank
1300a: tank discharge port
1300b: sealing layer
1500: frame member
10000: chassis

## Claims

1. A vehicle device comprising:
a battery pack; and
a tank,
wherein the battery pack comprises,
a plurality of battery cells;
a pack frame in which the battery cells are directly mounted or in which the battery cells are mounted while being housed in a module frame; and
a pack cover that covers the pack frame, and
wherein the tank comprises,
a cooling water or fire extinguishing water;
a tank discharge port through which cooling water or fire extinguishing water is discharged; and
a sealing layer provided on one side surface where the tank discharge port is disposed.

2. The vehicle device of claim 1,
wherein the sealing layer is melted or ruptured at a high temperature, so that the cooling water or fire extinguishing water is discharged.

3. The vehicle device of claim 1,
wherein the tank discharge port is provided toward the upper end of the pack cover.

4. The vehicle device of claim 1,
wherein the battery pack has a valve for discharging internal gas.

5. The vehicle device of claim 1,
wherein the tank is fixed to the chassis between the pack cover and the chassis inside the vehicle device.

6. The vehicle device of claim 1,
wherein the battery pack comprises one or more frame members that are provided in the pack cover and have cooling water or fire extinguishing water.

7. The vehicle device of claim 6,
wherein the frame member is a pipe-shaped member having a cavity part therein and extending in one direction, and the cooling water or the fire extinguishing water is provided in the cavity part.

8. The vehicle device of claim 6,
wherein the frame member comprises a TIM pad that abuts on the pack cover.

9. The vehicle device of claim 8,
comprising an adhesive tape positioned between the frame member and the TIM pad.

10. The vehicle device of claim 6,
wherein the frame member comprises one or more frame member valves that discharge cooling water or fire extinguishing water.

11. The vehicle device of claim 10,
wherein the frame member valve comprises a frame member discharge port directed toward the pack cover.

12. The vehicle device of claim 6,
wherein the frame member comprises a mounting part having a mounting hole formed therein, and
a mounting bolt passes through the mounting hole and is fastened to the pack cover.

13. The vehicle device of claim 12,
wherein the frame member comprises a first cavity part and a second cavity part in which the cooling water or the fire extinguishing water is provided, and the mounting part is positioned between the first cavity part and the second cavity part.

14. The vehicle device of claim 6,
wherein the frame member is welded and joined to the pack cover.

15. The vehicle device of claim 6,
wherein the frame member is fixed to the pack cover between the pack cover and the chassis inside the vehicle device.
